# EUROPÄISCHE PATENTSCHRIFT

(11) **EP 0 245 650 B1**
(45) Veröffentlichungstag und Bekanntmachung des Hinweises auf die Patenterteilung: **21.07.1993**
(21) Anmeldenummer: 87105108.2
(22) Anmeldetag: 07.04.1987
(51) Int. Cl.: B60N 2/08

(54) **Rückhalteeinrichtung in Fahrzeugen**
Backing apparatus in vehicles
Dispositif de soutien pour véhicules

(30) Priorität: 14.04.1986 DE 3612474; 05.05.1986 DE 3615160
(43) Veröffentlichungstag der Anmeldung: 19.11.1987
(60) Teilanmeldung: 92116704.5
(73) Patentinhaber: P.A. Rentrop, Hubbert & Wagner Fahrzeugausstattungen GmbH & Co. KG, 31653 Stadthagen (DE)
(72) Erfinder: Ernst, Hans-Hellmut, 22926 Ahrensburg (DE)
(74) Vertreter: Patentanwälte Dipl.-Ing. Bodo Thielking Dipl.-Ing. Otto Elbertzhagen

(56) Entgegenhaltungen:
- DE-A- 2 641 237
- DE-B- 1 139 958
- DE-C- 654 466
- DE-C- 850 849
- FR-A- 2 142 097
- US-A- 3 117 765

## Beschreibung

Die Erfindung betrifft eine Rückhalteeinrichtung für Kraftfahrzeugsitze mit einem auf einem Lastträger längenverschiebbar angebrachten Blockierelement mit einer beschleunigungssensitiven Sperre, die bei Ansprechen unerwünschte Relativbewegungen in oder entgegen Fahrtrichtung zwischen dem Lastträger und dem Blockierelement unterbindet, wobei ein mit Sensormasse versehenes Sperrelement vorgesehen ist, das bei Aktivierung in Eingriff mit dem Lastträger gelangt.

Die Sitze von Kraftwagen sind zur Einstellung der gewünschten Sitzposition sowohl in der Höhe als auch in der Fahrzeuglängsrichtung verstellbar. Die Kräfte, die von den bekannten Verstellsystemen, welche aus Kosten- und Gewichtsgründen sehr leicht ausgeführt werden, aufgenommen werden können, sind jedoch relativ gering. Die am weitesten verbreiteten Systeme können nicht sicher verhindern, daß bei Unfällen oder Notbremsungen der Sitz aus der Halterung an der Fahrzeugzelle gelöst wird.

Es ist deshalb zur Lösung dieses Problems bereits die im Oberbegriff des Anspruchs 1 beschriebene Lösung bekannt, welche bei Ansprechen der beschleunigungssensitiven Sperre den Lastträger und damit den Fahrzeugsitz in seiner Zuordnung zur Fahrzeugzelle fixiert.

Die bekannte Rückhalteeinrichtung wirkt nur bei einem Abbremsen des Fahrzeugs in Vorwärtsfahrtrichtung.

Ausgehend von diesem Stand der Technik liegt der Erfindung die Aufgabe zugrunde, eine Rückhalteeinrichtung so auszubilden, daß sie bei Überschreiten eines vorgegebenen Werts unabhängig von der Richtung der auftretenden Beschleunigung wirkt.

Die Lösung dieser Aufgabe erfolgt mit den Merkmalen des Kennzeichnungsteils von Anspruch 1.

Bevorzugte Ausgestaltungen der Erfindung sind in den Unteransprüchen beschrieben.

Ausführungsbeispiele der Erfindung werden noch anhand der Zeichnungen erläutert. Es stellen dar:
- Fig. 1: eine schematische Ansicht eines höhenverstellbaren Fahrzeugsitzes, der mit einer erfindungsgemäßen Rückhalteeinrichtung versehen ist,
- Fig. 2: eine schematische Schnittansicht einer Rückhalteeinrichtung mit einem zweifachsensitiven in einer Richtung wirkenden Zahngesperre,
- Fig. 3: eine schematische Schnittansicht einer Rückhalteeinrichtung mit einem zweifachsensitiven Hubgesperre mit Zahnverriegelung,
- Fig. 4: eine schematische Schnittansicht einer Rückhalteeinrichtung mit einem zweifachsensitiven Hubgesperre mit Klemmverriegelung,

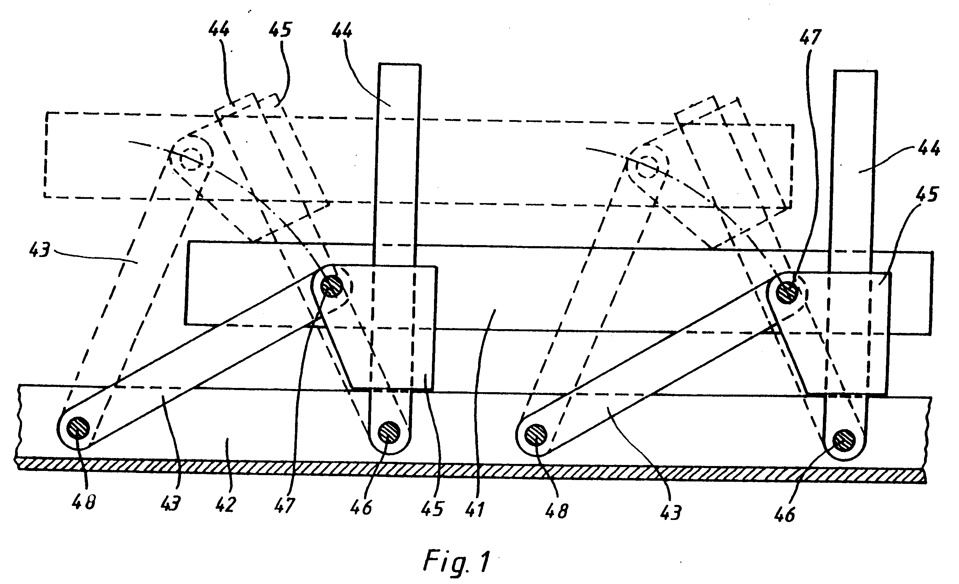

Die in Fig. 1 gezeigte Vorrichtung zur Höhenverstellung eines Fahrzeugsitzes, von dem nur dessen unterer Rahmen 41 zum Teil dargestellt ist, weist am Rahmen 41 und an einer Basis 42 in den Punkten 46 und 48 schwenkbar gehaltene Lenker 43 und 44 auf. Der Hubweg des Rahmens 41 ist durch die Schwenkbewegung der Führungslenker 43 festgelegt. Während der Verstellbewegung des Rahmens 41 gleitet auf dem als Lastträger dienenden Lenker 44 ein auf plötzliche Geschwindigkeitsänderungen des Fahrzeuges ansprechendes Blockierelement 45, das zusammen mit dem Führungslenker 43 im Punkt 47 am Rahmen 41 angelenkt ist.

Der Rahmen 41 wird von einem nicht gezeigten Antriebssystem in die gewünschte Lage (von der die angehobene mit gestrichelten und die abgesenkte mit ausgezogenen Linien angedeutet ist) bewegt und in derselben gehalten. Bei plötzlichen Geschwindigkeitsänderungen des Fahrzeuges löst ein Sensor im Blockierelement 45 eine Sperre aus, die das Blockierelement 45 auf dem Lastträger 44 unverschiebbar festhält. Bei gesperrtem Blockierelement bilden der Führungslenker 43 und der Lastträger 44 mit der Basis 42 einen starren Dreieckverband, der die von der Trägheit des Sitzes mit der daran von einem Gurtsystem gehaltenen Personen bei plötzlichen Geschwindigkeitsänderungen des Fahrzeuges herrührenden Massekräfte aufnimmt und in die Fahrzeugzelle ableitet, ohne das Antriebssystem für die Höhenverstellung des Sitzes zu belasten.

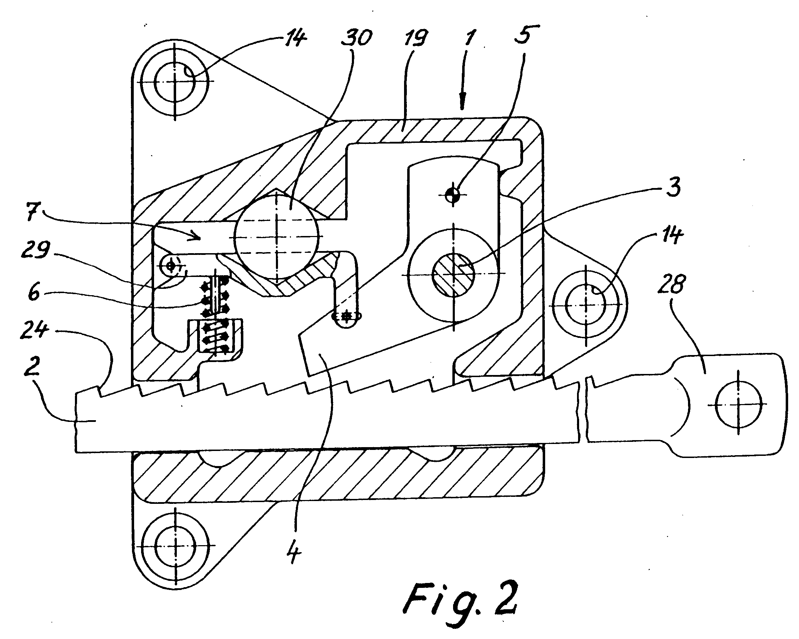

In der Fig. 2 ist eine Rückhalteeinrichtung mit einem zweifachsensitiven Blockierelement 1 dargestellt, das einen zusätzlichen Beschleunigungssensor 7 aufweist. Das Blockierelement 1 weist Befestigungsbohrungen 14 auf, an denen eine nicht dargestellte Masse, z.B. der Sitz eines Kraftfahrzeuges gehalten ist. Durch das Gehäuse 1 erstreckt sich gleitend ein zahnstangenförmiger Lastträger 2 mit Verzahnung 24, in die die Sperrklinke 4 einfallen kann. Die Sperrklinke 4 ist um eine Achse 3 verschwenkbar. Der Lastträger 2 ist über ein Befestigungsauge mit der nicht dargestellten Zelle eines Kraftfahrzeuges verbunden. Der Beschleunigungssensor besteht aus einem Impulshebel 29 und einer Kugel (Masse) 30, die in kegelförmigen Ausnehmungen des Gehäuses 19 und Impulshebels 29 gelagert ist und wirkt ebenso wie die Sensormasse 5 auf die Sperrklinke 4 ein. Die Sensorfeder 6 bestimmt das beschleunigungssensitive Ansprechniveau. Während die Sensormasse 5 nur auf Geschwindigkeitsänderungen des Systems in Achsrichtung des Lastträgers 2 anspricht, leitet der zusätzliche Sensor 7 auch Sperrungen ein, wenn Beschleunigungen/Verzögerungen quer zu dieser Richtung wirken.

Je nach gewünschtem Ansprechniveau kann eine Sensorfeder für beide Massen 30 und 5 eingesetzt werden oder je eine Sensorfeder pro Sensormasse.

Die zweifachsensitive Ausführung der Rückhalteeinrichtung schafft die Möglichkeit, Sperrungen auch dann einzuleiten, wenn Beschleunigungen aus unterschiedlichen Richtungen auf das System einwirken.

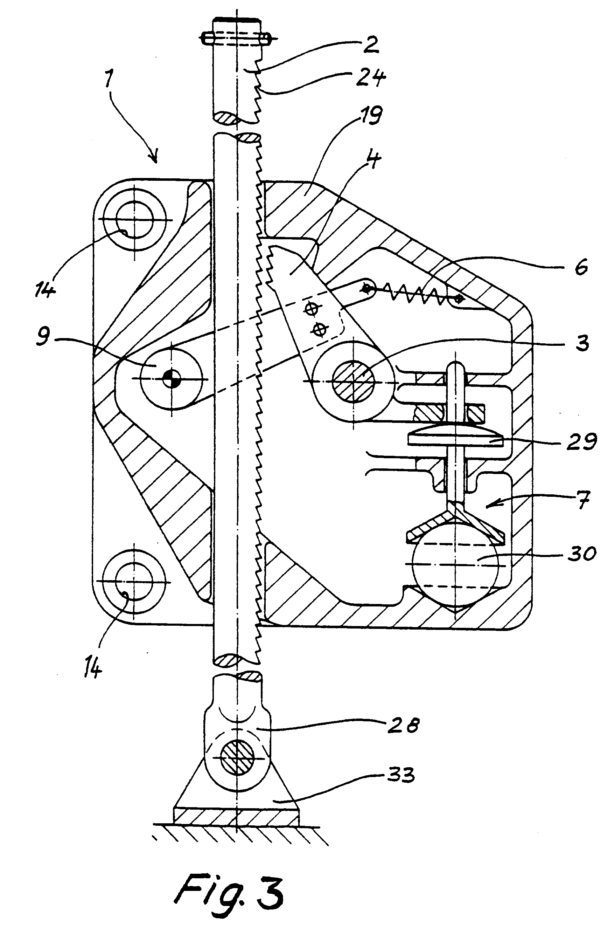

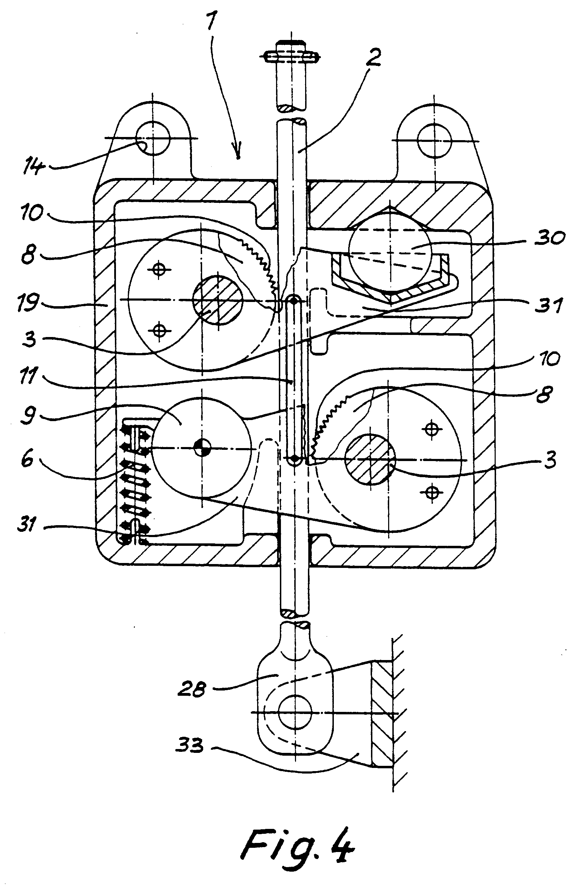

Eine andere Wirkungsweise der beschleunigungssensitiven Blockiereinleitung ist bei den Ausführungsbeispielen gem. Fig. 3 und 4 gegeben.

In der Fig. 3 ist das Blockierelement 1 als Hubgesperre dargestellt, das mit einer gleichförmigen Geschwindigkeit an einem Lastträger 2 in weitgehend vertikaler Richtung verfahren werden kann. Bei einem plötzlichen Ruck nach oben erfolgt jedoch unverzüglich eine Sperrung zwischen dem Blockierelement 1 und dem Lastträger 2.

Eine Anwendungsmöglichkeit eines solchen Hubgesperres ist ein Sicherheitsgurt, der mit einem höhenverstellbaren Fahrzeugsitz zusammenwirkt. Die beiden unteren Befestigungspunkte des Sicherheitsgurtes (Beckengurtende, Gurtschloß) sind über die Befestigungsbohrungen 14 mit je einem Blockierelement 1 über den Sitzrahmen verbunden. Der Lastträger 2 ist mit dem Befestigungsauge 28 an einer Befestigungslasche 33 gehalten, die zur Fahrzeugzelle gehört oder ein Gleitstück in der Sitzschiene für die horizontale Sitzverstellung des Fahrzeugsitzes bildet.

Für diesen Einsatzzweck ist der zweifachsensitive Aufbau des Blockierelementes 1 mit dem zusätzlichen Beschleunigungssensor 7 neben der an der Klinke 4 gehaltenen Sensormasse 9 besonders vorteilhaft. Ein Sicherheitsgurt wird bei einem Unfall erst 20 bis 25 Millisekunden nach Crashbeginn belastet und somit wirkt auch erst dann der vertikale Ruck nach oben. Die Beschleunigung in den starren Karosserieteilen setzt sich jedoch viel schneller fort, so daß schon wenige Millisekunden nach Crashbeginn die Massekugel 30 auslenkt und über den Impulshebel 29 gegen die Kraft der Sensorfeder 6 die Klinke 4 aktiviert, bevor der Ruck mit der Belastungsaufnahme nach oben erfolgt. Auf diese Weise wird somit eine sofortige Blockierung der Rückhalteeinrichtung mit minimalen Wegverlusten realisiert.

In Fig. 4 ist noch ein zweifachsensitives Hubgesperre mit Klemmblockierung dargestellt. Dieses Gesperre weist im Gehäuse 19 des Blockierelementes 1 zwei durch einen Stößel 11 miteinander verbundene Klemmelemente 8 auf, die um Achsen 3 schwenkbar sind. Dabei ist dem unteren Klemmglied 8 die Sensormasse 9 zugeordnet, an der die Sensorfeder 6 angreift und die hauptsächlich auf plötzliche Geschwindigkeitsänderungen in Richtung der Achse des Lastträgers 2, dessen Befestigungsauge 28 an der Lasche 33 der Fahrzeugzelle befestigt ist, anspricht. Während auf das obere Klemmglied 8 über einem Träger 31 der mit der Massekugel 30 ausgestattete und im wesentlichen auf Horizontalbeschleunigungen ansprechende Sensor 7 einwirkt. Über den Stößel 11 werden sämtliche Sensoraktivitäten auf beide Klemmelemente 8 übertragen, deren Klemmverzahnungen 10 dadurch gleichzeitig in Eingriff mit dem Lastträger 2 gelangen.

## Patentansprüche

1. Rückhalteeinrichtung für Kraftfahrzeugsitze mit einem auf einem Lastträger (2; 44) längenverschiebbar angebrachten Blockierelement (1; 45) mit einer beschleunigungssensitiven Sperre, die bei Ansprechen unerwünschte Relativbewegungen in oder entgegen Fahrtrichtung zwischen dem Lastträger und dem Blockierelement (1; 45) unterbindet, wobei ein mit Sensormasse (5; 9) versehenes Sperrelement vorgesehen ist, das bei Aktivierung in Eingriff mit dem Lastträger gelangt,
dadurch gekennzeichnet,
daß auf das mit Sensormasse (5; 9) versehene Sperrelement (4; 8) ein zusätzlicher Beschleunigungssensor (7, 30) einwirkt, der richtungsunabhängig auf Geschwindigkeitsänderungen mit Komponenten quer zur Fahrtrichtung anspricht, die einen vorgegebenen Wert überschreiten.

2. Rückhalteeinrichtung nach Anspruch 1,
dadurch gekennzeichnet,
daß innerhalb des Blockierelements (1; 45) mindestens ein Sperrelement (4; 8; 13; 15) mit Sensormasse (5; 9; 16; 30) schwenkbar gelagert ist, das nach Überschreiten einer vorgegebenen Beschleunigungsschwelle gegen die Kraft mindestens einer Sensorfeder (6; 21) auslenkt.

3. Rückhalteeinrichtung nach Anspruch 1 oder 2,
dadurch gekennzeichnet,
daß der Beschleunigungssensor (7) als Sensormasse eine Kugel (30) aufweist, die in je einer kegelförmigen Ausnehmung des Gehäuses (19) und eines Hebels (29; 31) gelagert ist, der gegen die Kraft der Sensorfeder (6) verstellbar ist und auf das Sperrelement (4; 8) einwirkt.

4. Rückhalteeinrichtung nach einem oder mehreren der Ansprüche 1 bis 3,
dadurch gekennzeichnet,
daß zwei Sperrelemente (8) vorgesehen und auf einander gegenüberliegenden Seiten des Lastträgers (2) angeordnet sind, die auf entgegengesetzte Geschwindigkeitsänderungen ansprechen.

5. Rückhalteeinrichtung nach Anspruch 4,
dadurch gekennzeichnet,
daß die Sperrelemente (8) über einen Stößel (11) miteinander verbunden sind.

6. Rückhalteeinrichtung nach einem oder mehreren der Ansprüche 1 bis 5,
dadurch gekennzeichnet,
daß das Sperrelement (8) als Klemmglied ausgebildet ist, das eine zur Schwenkachse (3) exzentrisch angeordnete Klemmfläche aufweist, die eine Klemmverzahnung (10) besitzt.

## Claims

1. Restraint mechanism for vehicle seats with a blocking element (1;45) attached for longitudinal displacement on a load carrier (2; 44) and having an acceleration-sensitive lock which when responding stops undesired relative movements in or against the travel direction between the load carrier and the blocking element (1; 45) wherein a locking element having a sensor mass (5; 9) when activated moves into engagement with the load carrier,
characterised in that an additional acceleration sensor (7, 30) acts on the locking element (4 ;8) provided with the sensor mass (5; 9), this acceleration sensor responding independently of direction to changes in the speed with components across the travel direction which exceed a predetermined value.

2. Restraint mechanism according to claim 1,
characterised in that at least one locking element (4; 8; 13; 15) with sensor mass (5; 9; 16; 30) is swivel mounted inside the blocking element (1; 45) and after exceeding a predetermined acceleration threshold is deflected against the force of at least one sensor spring (6; 21).

3. Restraint mechanism according to claim 1 or 2
characterised in that the acceleration sensor (7) has as a sensor mass a ball (30) which is mounted in a conical recess in each of the housing (19) and a lever (29; 31) which is displaceable against the force of the sensor spring (6) and acts on the locking element (4; 8).

4. Restraint mechanism according to one or more of claims 1 to 3,
characterised in that two locking elements (8) are provided and are mounted on opposite sides of the load carrier (2) which respond to opposite speed changes.

5. Restraint mechanism according to claim 4,
characterised in that the locking elements (8) are connected together by a ram (11).

6. Restraint mechanism according to one or more of claims 1 to 5
characterised in that the locking element (8) is designed as a clamping member which has a clamping face which is set eccentric relative to the swivel axis (3) and has a clamp gearing (10).

## Revendications

1. dispositif de maintien pour sièges de voitures automobiles, avec un élément de blocage (1; 45), déplaçable longitudinalement sur un support de charge (2; 44) et pourvu d'un cliquet sensible à l'accélération, lequel supprime, par réaction, les mouvements relatifs, indésirables, entre le support de charge et l'élément de blocage (1; 45), dans le sens de marche ou le sens opposé, un élément d'arrêt, pourvu d'une masse de détection, étant prévu, lequel entre en prise avec le support de charge lors de l'activation,
caractérisé par le fait
qu'un détecteur d'accélération supplémentaire (7, 30) agit sur le cliquet d'arrêt (4), pourvu de la masse de détection (5; 9), lequel détecteur d'accélération supplémentaire (7; 30) répond aux changements de vitesse transversaux par rapport au sens de marche, lors du dépassement d'une valeur prédéfinie, indépendemment du sens. .

2. Dispositif de maintien selon revendication 1,
caractérisé par le fait
qu'au moins un arrêtoir (4; 8; 13; 15) est monté, pivotant, avec masse de détecteur (5; 9; 16; 30), dans l'élément de l'élément de blocage (1; 45), lequel arrêtoir dévie contre la force d'au moins un ressort de détecteur (6; 21), lorsqu'un seuil d'accélération prédéfini est dépassé.

3. Dispositif de maintien selon revendication 1 ou 2,
caractérisé par le fait
que le détecteur d'accélération (7) présente, comme masse, une bille (30, logée dans les cavités coniques du carter (19) et d'un levier (29; 31), lequel est réglable contre la force du ressort du détecteur (6) et agit sur l'élément d'arrêt (4; 8).

4. Dispositif de maintien selon l'une ou plusieurs des revendications 1 à 3,
caractérisé par le fait
que deux arrêtoirs (8) sont prévus, disposés chacun d'un côté du support de charge (2), et réagissent aux changements de vitesse opposés.

5. Dispositif de maintien selon revendication 4,
caractérisé par le fait
que les éléments d'arrêt (8) sont reliés ensemble à l'aide d'un coulisseau (11).

6. Dispositif de maintien selon l'une ou plusieurs des revendications 1 à 5,
caractérisé par le fait
que l'élément d'arrêt (8) est conçu sous forme de membre de serrage, présentant une surface de serrage disposée excentriquement par rapport à l'axe de pivotement (3) et pourvue d'une denture de blocage (10).
